Europäisches Patentamt

European Patent Office

Office européen des brevets

(11) Publication number: **0 138 651 B1**

# EUROPEAN PATENT SPECIFICATION

(45) Date of publication of patent specification: **02.12.92**  (51) Int. Cl.5: **G06F  15/00**

(21) Application number: **84401772.3**

(22) Date of filing: **07.09.84**

(54) **Microprocessor integrated circuit.**

(30) Priority: **12.09.83 US 530990**
**12.09.83 US 530995**
**12.09.83 US 530996**
**12.09.83 US 530997**

(43) Date of publication of application:
**24.04.85 Bulletin  85/17**

(45) Publication of the grant of the patent:
**02.12.92 Bulletin  92/49**

(84) Designated Contracting States:
**DE FR GB IT NL**

(56) References cited:
**EP-A- 0 011 374**
**EP-A- 0 124 402**
**US-A- 3 940 743**
**US-A- 4 155 118**

**WESCON TECHNICAL PAPERS, vol. 22, Western Electronic Show and Convention, September 12-14, 1978, Los Angeles, California, US, pages 1-6; D. BURNS et al.: "A 16-Bit CMOS/SOS microprocessor."**

**Sa buro Muroga: "VLSI System Design", 1982 pages 116-122, Wiley-Interscience Publication, N.Y.**

**Glen G. Langdon, Jr.: "Computer Design" 1982, pages 508-510 and 525-526, Computeach Press Inc. San Jose.**

(73) Proprietor: **FAIRCHILD SEMICONDUCTOR CORPORATION**
**10400 Ridgeview Court P.O. Box 1500**
**Cupertino, California 95014(US)**

(72) Inventor: **El-Diwany, Monir**
**300 O'Keefe Street 2**
**Palo Alto California 94303(US)**
Inventor: **Hui, Edward**
**903 Irving Street**
**San Francisco California 94122(US)**
Inventor: **Pang, Richard**
**813 S. Wolfe Road**
**Sunnyvale California 94086(US)**
Inventor: **Hingarh, Hemraj K.**
**3446 Woodyend Court**
**San Jose California 95121(US)**

(74) Representative: **Sparing Röhl Henseler Patentanwälte European Patent Attorneys**
**Rethelstrasse 123**
**W-4000 Düsseldorf 1(DE)**

**Description**

The present invention relates to a microprocessor integrated $I^2L$ circuit which exhibits the features included in the preamble of patent claim 1. Such a circuit is disclosed in EP-A-0 124 402 which constitutes prior art under the provisions of Art. 53 (3) and (4).

Further, the publication WESCON TECHNICAL PAPERS, vol. 22, Western Electronic Show and Convention, Sept. 12-14 1978, Los Angeles, California, US, pages 1-6, D. Burns et al: "A 16 Bit CMOS/SOS Microprocessor" discloses a microprocessor having a register file comprising a plurality of registers, each of the first plurality being connected to one of a second plurality of local buses which, in turn, are connected to a main bus via a multiplexer.

A wide variety of integrated circuit microprocessors are now known in the prior art. All of the major semiconductor manufacturers in the United States offer such integrated circuits implemented in complementary metal oxide (CMOS) form or in bipolar integrated circuit form, whether in integrated injection logic ($I^2L$) or combined $I^2L$ and transistor-transistor logic (TTL) form. For example, the commercially available F9445 Microprocessor Integrated Circuit, available from the assignee of this application, is a high performance combined $I^2L$ and TTL integrated circuit. A further description of that integrated circuit is contained in the following copending, commonly assigned applications:

Application Serial No. 167,614 by Hemraj K. Hingarh, entitled "COMBINED INTEGRATED INJECTION LOGIC AND TRANSISTOR-TRANSISTOR LOGIC MICROPROCESSOR INTEGRATED CIRCUIT DESIGN", filed July 11, 1980, and

Application Serial No. 167,607 by Michael G. Mladejovsky, entitled "CYCLE COUNTER FOR MICROPROCESSOR INTEGRATED CIRCUIT", filed July 11, 1980.

While the art pertaining to the design of microprocessor integrated circuits is therefore a well developed one, a need still remains for further improvements in such design in order to achieve greater levels of functionality and performance in high performance microprocessors.

It is the object of the present invention to provide a microprocessor integrated $I^2L$ circuit as defined in the preamble of patent claim 1 exhibiting proper biasing conditions across the entire circuit while providing an injection bus of reduced width.

This object is addressed by a circuit having all the features of patent claim 1. The patent claims directly or indirectly depending upon patent claim 1 define preferred details of the invention.

The invention will become readily apparent upon reading of the following detailed description with reference to the attached drawings.

**BRIEF DESCRIPTION OF THE DRAWINGS**

Figure 1 is a key showing placement of Figures 1A and 1B.

Figures 1A and 1B are a generalized block diagram of a microprocessor integrated circuit which uses the present invention.

Figure 2 is a timing generator state diagram for the microprocessor integrated circuit of Figures 1A and 1B.

Figure 3 is an external view of the microprocessor integrated circuit of Figures 1A and 1B, showing external signals supplied to and from the microprocessor integrated circuit of Figures 1A and 1B.

Figure 4 is a block diagram of a ROM configured in accordance with the invention.

Figure 5 is a circuit schematic of a ROM circuit utilized in the invention.

Figure 6 is a circuit schematic of another ROM circuit utilized in the invention.

Figure 7 is a circuit schematic of another ROM circuit utilized in the invention.

Figures 8 and 9 are plan views of bus structures used in the invention.

Figure 10 is a block diagram of a register file data path bus structure used in the invention.

Figure 11 is a logic diagram of a latch circuit used in the invention.

Figure 12 is a circuit schematic of a flip-flop circuit used in the invention.

Figure 13 is a truth table useful for understanding the circuit schematic of Figure 12.

Figures 14, 15 and 16 are waveform diagrams also useful for understanding operation of the circuit in Figure 11.

Figure 17 is a logic diagram of a timing circuit used in the invention.

Figure 18 is a circuit schematic of the timing circuit in Figure 17.

Figure 19 is a waveform diagram useful for understanding the logic diagram of Figure 17.

Figure 20 is a logic and block diagram of a circuit generating inputs to the circuits of Figures 12, 17 and 18.

Figure 21 is a waveform diagram useful for understanding operation of the circuit in Figure 20.

## DETAILED DESCRIPTION OF THE INVENTION

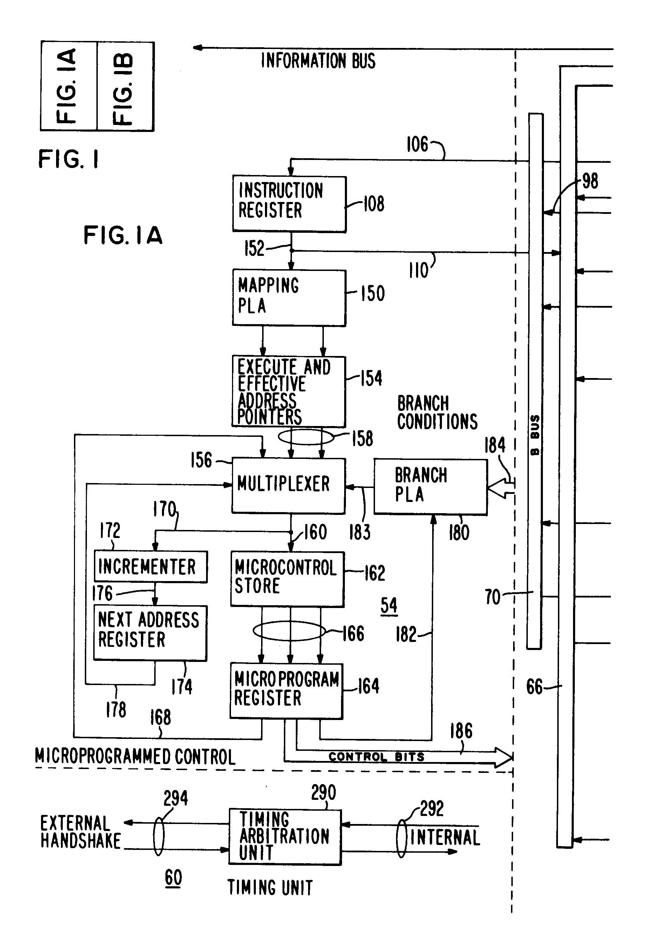

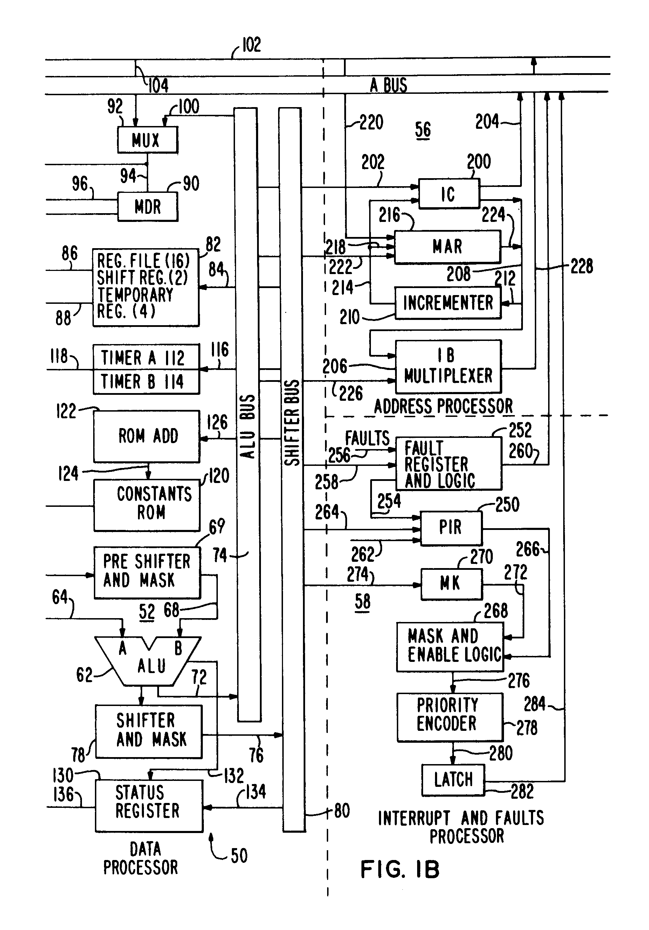

Turning now to the drawings, more particularly to Figures 1A and 1B, there is shown a microprocessor integrated circuit 50 in accordance with the invention. The microprocessor 50 consists of five main sections: a data processor 52, a microprogrammed control 54, an address processor 56, an interrupt and fault processor 58, and a timing unit 60.

The 16 bit wide data processor section 52 is responsible for all data processing in the microprocessor 50. The data processor 52 includes the functional blocks discussed below. A 17 bit arithmetic logic unit (ALU) 62 receives inputs at 64 from an A input bus 66, and at 68, through a preshifter and mask 69, from B input bus 70. Outputs from the ALU 62 are supplied at 72 to an ALU bus 74, and at 76, through shifter and mask 78, to a shifter bus 80. Register file 82 contains 16 general purpose registers $R_0$-$R_{15}$ and six working registers. The register file 82 receives inputs from ALU bus 74 at 84 and provides inputs to the A input bus 66 and the B input bus 70 at 86 and 88, respectively. A memory data register 90 receives inputs from multiplexer 92 at 94 and supplies inputs to the A input bus 66 and the B input bus 70 at 96 and 98, respectively. The multiplexer 92 receives inputs from the ALU bus 74 at 100 and from the information bus 102 at 104. The multiplexer 92 also supplies inputs at 106 to instruction register 108 in the microprogrammed control section 54. The instruction register 108 provides inputs at 110 to the A input bus 66. Two timers 112 and 114 receive inputs from shifter bus 80 at 116 and provide inputs at 118 to the A input bus 66. A constants ROM 120 receives ROM addresses from ROM address register 122 at 124. The ROM address register 122 receives inputs from the shifter bus 80 at 126. A status register 130 receives inputs from the ALU 62 at 132 and from the shifter bus 80 at 134. The status register 130 provides inputs to A input bus 66 at 136.

The instruction register 108 in microprogrammed control section 54 provides new instructions fetched into the instruction register 108 to the mapping PLA 150 at 152. The multiplexer 156 provides inputs at 160 to the microcontrol stoke 162, which contains the execution and the effective address routines. The microcontrol store 162 generates three output fields to the microprogram register 164 at 166. The next address field supplied to microprogram register 164 is supplied at 168 to multiplexer 156. The multiplexer 156 also supplies inputs at 170 to incrementer 172. The incrementer 172 provides inputs to the next address register 174 at 176. The next address register 174 provides inputs at 178 to the multiplexer 156. The microprogram register 164 supplies the branch field output from microcontrol store 162 to a branch PLA 180 at 182. The branch PLA 180 provides inputs to the multiplexer 156 at 183. Branch conditions are supplied to the branch PLA 180 by the data processor section 52 at 184. The third output field from microcontrol store 162 supplied through the microprogram register 164 controls operation of all the components in the data processor 52 and is supplied to the data processor section 52 at 186.

The address processor section 56 includes an instruction counter (IC) 200, which receives inputs from the ALU bus 74 at 202. The IC 200 supplies instruction addresses to the A input bus 66 at 204. The IC 200 also supplies the instruction addresses to the information bus multiplexer 206 at 208, and to the incrementer 210 at 212. Outputs from the incrementer 210 are supplied to the IC 200 at 214, and to a memory address register (MAR) 216 at 218. Additional inputs to the MAR 216 are supplied by the information bus 102 at 220 and the ALU bus 74 at 222. The MAR 216 determines the addresses for all operands and supplies the address outputs at 224 to the incrementer 210 and the information bus multiplexer 206. An additional input to the information bus multiplexer is supplied by the ALU bus 74 at 226. The output of the information bus multiplexer 206 is supplied to the information bus 102 at 228. The incrementer 210 provides IC and operand address updates paralleling operation of the data processor section 52.

The interrupt and faults processor section 58 handles all interrupts and faults, whether generated internally or externally of the microprocessor 50. The interrupts and fault processor 58 has a pending interrupt register (PIR) 250. A fault register and logic (FT) 252 provides inputs to the PIR 250 at 254. Fault inputs are supplied to the FT 252 at 256, and from the shifter bus 80 at 258. Outputs from the FT 252 are also supplied to the A input bus 66 at 260. Additional interrupt inputs to the PIR 250 are supplied at 262, and from the shifter bus 80 at 264. Outputs from the PIR 250 are supplied at 266 to mask and interrupt enable logic 268. A mask register (MK) 270 provides inputs at 272 to mask and interrupt enabling logic 268. Inputs to the MK 270 are providing from shifter bus 80 at 274. The mask and interrupt enabling logic 268 provides outputs at 276 to a priority encoder 278. The priority encoder 278 provides outputs at 280 to a latch 282. The latch 282 provides outputs at 284 to the A input bus 66.

The timing unit 60 generates internal and external strobes required for internal operation of the

3

microprocessor 50 and different bus transactions. Internal inputs are provided to and from a timing arbitration unit 290 at 292. Inputs external of the microprocessor 50 are provided to and from the timing arbitration unit 290 at 294.

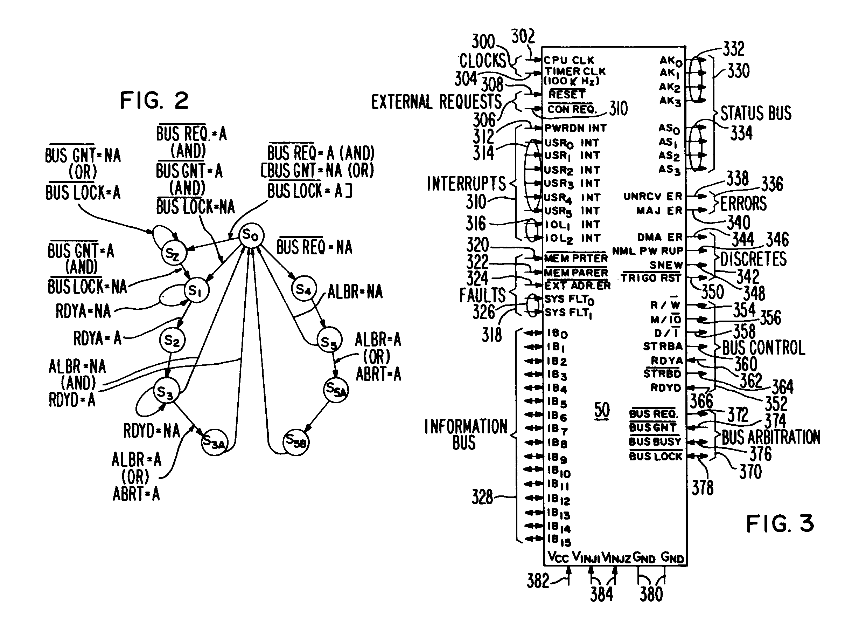

A basic machine cycle for the microprocessor 50 may comprise 3, 4 or 5 CPU clock cycles or states as shown in the state diagram of Figure 2. The legends used in Figure 2 have the meanings shown below in Table 1.

| | |
|---|---|
| A | Asserted (active) |
| NA | Not Asserted |
| ALBR | ALU Branch cycle (5 states) - internal signal |
| ABRT | Abort condition - internal signal |
| BUS REQ | Bus Request |
| BUS GNT | Bus Grant input |
| BUS LOCK | Bus Lock |
| RDYA | RDYA input |
| RDYD | RDYD input |
| $S_Z$ | High impedance state - CPU drivers are 3-state |

A three-state cycle, consisting of states $S_0$, $S_4$ and $S_5$ is used for operations purely internal to the ALU 62. A four-state cycle consisting of states $S_0$, $S_1$, $S_2$ and $S_3$ is used for minimum length operations utilizing one of the buses. A five-state cycle, consisting of states $S_0$, $S_1$, $S_2$, $S_3$ and $S_{3A}$ or $S_0$, $S_4$, $S_5$, $S_{5A}$ and $S_{5B}$ applies for those operations that use the result of a current operation of ALU 62 to determine the next address in the microprogrammed control store 162. The five-state cycle also applies to those operations following an abort condition. Every timing cycle starts with state $S_0$, in which the timing unit 60 receives the control information needed to initiate a bus cycle or an internal ALU cycle.

A bus cycle can be extended by manipulating BUS GNT, RDYA or RDYD external inputs. These signals hold the microprocessor 50 in high impedance state $S_Z$ when the bus 102 is assigned to another microprocessor 50 or direct memory access (DMA) device, state $S_1$, the address phase, or state $S_3$, the data phase, respectively, as shown in Figure 2.

Figure 3 shows the external inputs to and from the microprocessor 50. The clock inputs 300 to the microprocessor 50 include a 0-20 MHz CPU CLK signal at 302 and a 100 kHz timer CLK signal at 304. External requests 306 include a RESET signal at 308, which initializes the microprocessor 50 in its active low state, and a CONREQ signal, which initiates console operations after the current instruction being executed by the microprocessor 50, in its active low state.

A total of nine interrupt inputs 310 are provided to the microprocessor 50. A PWRDN INT signal 312, for a power down interrupt, is active on its positive going edge or its high level, according to the interrupt mode bit in the configuration register. $USR_0$ INT through $USR_5$ INT signals at 314 are user interrupts, active on the positive going edge or high level, according to the interrupt mode bit in the configuration register. The $IOL_1$ INT and $IOL_2$ INT signals at 316 are input/output level interrupts, which are active high inputs that can be used to expand the number of user interrupts.

Faults inputs are provided to the microprocessor 50 at 318. The $\overline{\text{MEM PRT ER}}$ signal at 320 represents a memory protect error and is an active low input generated by an external memory management unit (MMU) and/or an external block protect unit (BPU). It is sampled by BUS BUSY signal described below into bit 0 of fault register 252 in a CPU bus cycle, or bit 1 if a non-CPU bus cycle. A $\overline{\text{MEM PAR ER}}$ signal at 322 represents a memory parity error and is an active low input sampled by the BUS BUSY signal into bit 2 of the fault register 252. A $\overline{\text{EXTADR ER}}$ signal 324 represents an external address error and is an active low input sampled by the BUS BUSY signal into bit 5 or bit 8 of the fault register 252. $SYSFLT_0$ and $SYSFLT_1$ signals at 326 represent system faults and are active on the positive going edge to set bit 7 or bits 13 and 14, respectively, in the fault register 252.

The $IB_0$ through $IB_{15}$ information bus input and output signals at 328 represent active bi-directional, time multiplexed, address and data information on the 16 bit information bus 102. The bus 102 is three-stated during bus cycles not assigned to the microprocessor 50. The $IB_0$ signals is the most significant bit.

Status bus outputs from the microprocessor 50 are provided at 330. The AK0 through AK3 address key signals at 332 are active high outputs used to match with an access lock in an external MMU for memory accesses. A mismatch is one of several possible situations causing the MMU to pull the $\overline{\text{MEM}}$ $\overline{\text{PRT}}$ $\overline{\text{ER}}$ signal at 320 to its active low state. AS0 through AS3 address state signals at 334 are active high outputs which select the page register group in the external MMU.

Error outputs are provided at 336. A UNRCV ER unrecoverable error signal at 338 is an active high output indicating the occurrence of an error classified as unrecoverable. The instruction in which the error occurred is aborted. The MAJ ER major error signal at 340 is an active high output indicating the occurrence of an error classifed as major. The instruction in which the error occurred is also aborted.

Discrete outputs from the microprocessor 50 are provided at 342. The DMA ER direct memory access enable signal at 344 is active high and indicates that DMA is enabled. DMA is disabled when the external request $\overline{RESET}$ signal is active. An $\overline{NML}$ $\overline{PWRUP}$ signal at 346 is active high and indicates when the microprocessor 50 has completed its built in test in an initialization sequence successfully. The SNEW start new signal at 348 is active high and indicates that a new instruction will start executing in the next cycle. This information is useful for instruction tracing. The $\overline{TRIGO}$ $\overline{RST}$ trigger go reset signal at 350 is an active low discrete output.

Bus control inputs and outputs to and from the microprocessor 50 are provided at 352. The R/$\overline{W}$ read or write output signal at 354 indicates the direction of data flow. A high signal indicates a read or input operation and a low signal indicates a write or output operation. The output at 354 is three-stated during bus cycles not assigned to the microprocessor 50. The M/$\overline{IO}$ memory or I/O output signal at 356 indicates whether a current bus cycle is a memory (high) or I/O operation (low). The output 356 is three-stated during bus cycles not assigned to the microprocessor 50. A D/$\overline{I}$ data or instruction output signal at 358 indicates a current bus cycle access is for data if high or for instruction if low. The output 358 is three-stated during bus cycles not assigned to the microprocessor 50. The STRBA address strobe signal at 360 is used for latching the memory or XIO address in its active high output in an external latch at the high to low transition of strobe. The output 360 is three-stated during bus cycles not assigned to the microprocessor 50. The RDYA address ready signal is supplied at 362 and is an active high input used to extend the address phase of a bus cycle. The $\overline{STRBD}$ data strobe signal at 364 is an active low output used for strobing data in memory and XIO cycles. The output at 364 is three-stated during bus cycles not assigned to the microprocessor 50. The RDYD data ready signal at 366 is an active high input used to extend the data phase of a bus cycle. Wait states are inserted as long as RDYD is not active to accommodate slower memory devices.

Bus arbitration inputs and outputs are supplied to and from the microprocessor 50 at 370. The $\overline{BUS}$ $\overline{REQ}$ output signal at 372 is an active low output indicating that the microprocessor 50 requires the bus. This signal becomes inactive as soon as the microprocessor 50 has acquired the bus and started the bus cycle. The $\overline{BUS}$ $\overline{GNT}$ signal supplied at 374 from an external arbiter is an active low input which indicates that the microprocessor 50 currently has the priority bus request. If the bus is not locked, the microprocessor 50 may begin a bus cycle commencing with the next CPU clock. The $\overline{BUS}$ $\overline{BUSY}$ signal at 376 is an active low bi-directional signal used to establish the beginning and end of a bus cycle. The trailing edge low to high transition is used for sampling bits into the fault register 252. This signal is three-stated in bus cycles not assigned to the microprocessor 50. However, the microprocessor 50 monitors the $\overline{BUS}$ $\overline{BUSY}$ line 376 for latching other than microprocessor 50 bus cycle faults into the fault register 252. The $\overline{BUS}$ $\overline{LOCK}$ signal at 378 is an active low, bi-directional signal used to lock the bus for successive bus cycles. During non-locked bus cycles, $\overline{BUS}$ $\overline{LOCK}$ mimics $\overline{BUS}$ $\overline{BUSY}$. $\overline{BUS}$ $\overline{LOCK}$ is three-stated during bus cycles not assigned to the microprocessor 50.

Lines 380 of the microprocessor are grounded. Line 382 supplies a $V_{cc}$, nominally +5V, 225 mA, input to the microprocessor 50. Lines 384 supply a $V_{INJ1}$ and $V_{INJ2}$ input, nominally + 1.3V, 1.4A, to the microprocessor 50.

Further details on the system and operation of the microprocessor integrated circuit 50 are contained in the above referenced earlier filed related applications, the disclosures of which are incorporated by reference herein.

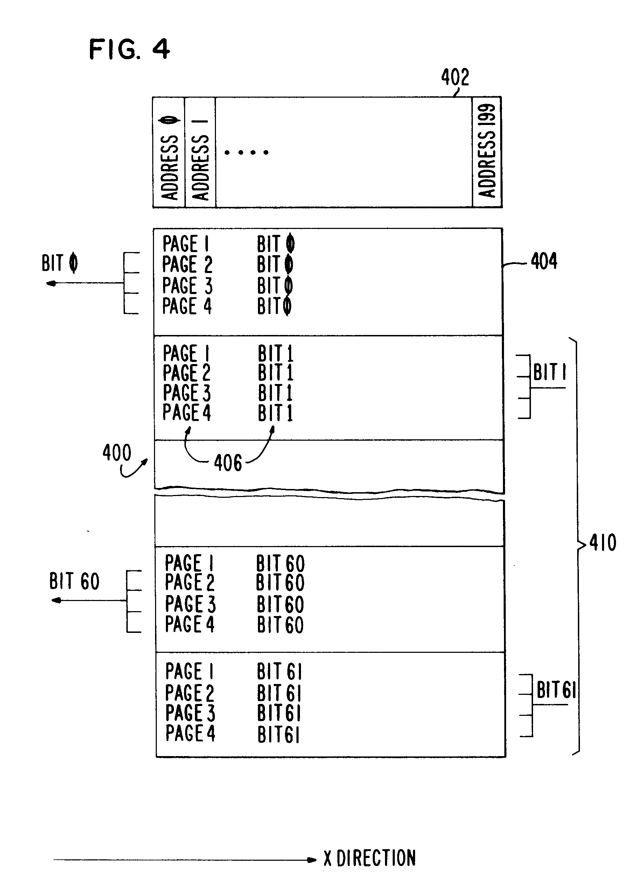

Figure 4 is a block diagram of a ROM 400 to implement the microcontrol store 162 used in the invention. Address portion 402 contains column addresses in memory portion 404, which is page and bit oriented as shown at 406. The ROM is row addressed at 410. In the X direction, one of 200 words in each page is addressed, and Y addresses one of the four pages.

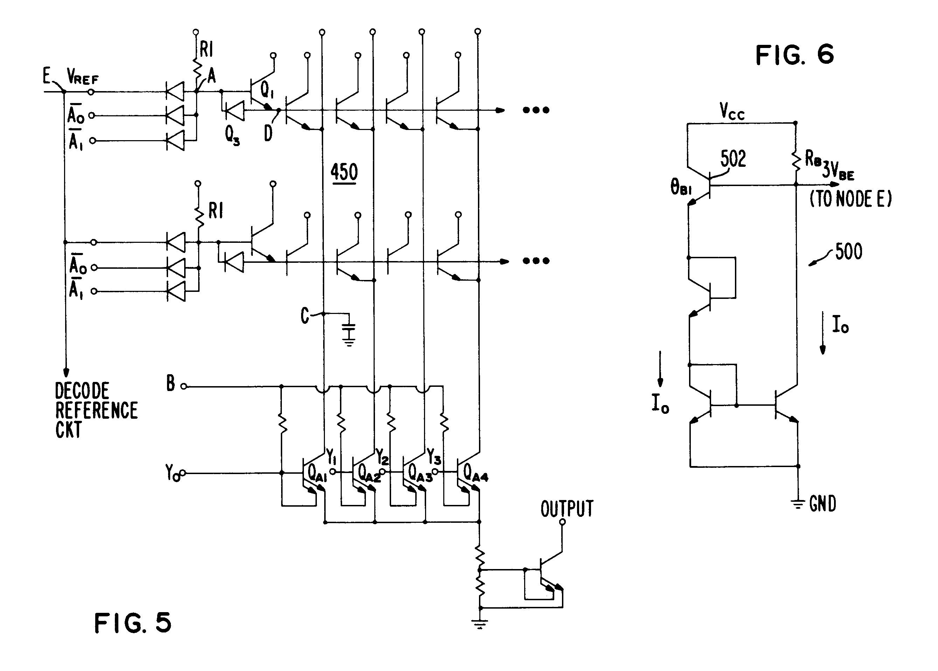

Figure 5 shows a decode circuit 450 employed in accessing the ROM 400. For speed considerations, it is desired to limit the voltage on node C. Hence, Node A is set at $4V_{be}$ and node B at $3V_{be}$. Transistor Q1 charges up the high base capacitance node D, with diode Q3 for discharging. Transistors QA1, QA2, QA3, and QA4 are for selecting one of the four pages. In a preferred form of the circuit, Vcc is a minimum of 4.5 volts at start up and $4V_{be}$ at node A.

Figure 6 shows a reference circuit 500 employed with the ROM 400 of Figure 4. The reference circuit is important for speed of the ROM 400 by limiting the voltage swing on the high capacitance node C (Figure 5) . The reference circuit 500 also helps to limit custom resistors in each $X_i$ otherwise required because of

5

the different loads, depending on how many emitter contacts are connected to each x line in the ROM. Only a constant resistor is required for each of 200 X addresses, shortening layout time for the ROM 400. Base 502 of transistor QB1 draws very little current, and I0' is essentially equal to I0.

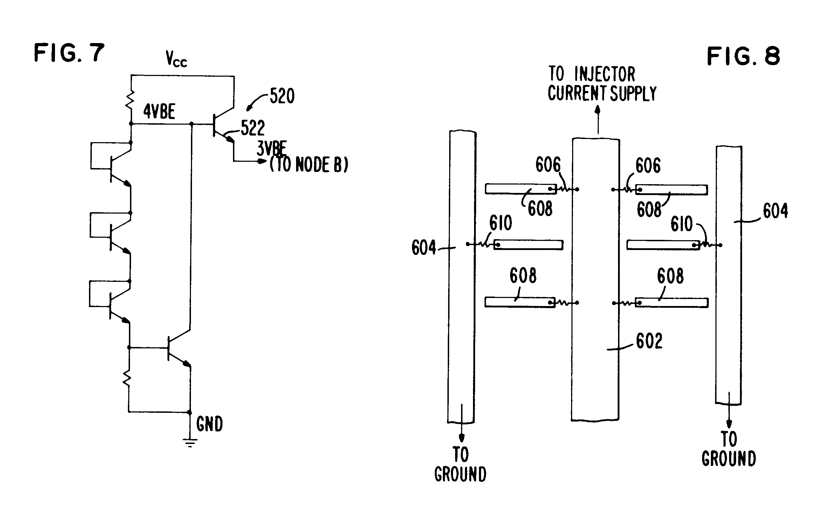

Figure 7 shows reference circuit 520, which is connected to node B (Figure 5) . Emitter 522 is set at $3V_{be}$.

Due to high current requirements for the microprocessor integrated circuit 50, i.e., a total $I_{inj}$ of about 1.4A, careful control of voltage drops in both injection and ground busses 602 and 604, respectively, is important. In order to maintain proper biasing for all parts of the integrated circuit 50, a maximum voltage difference of 25mV on all the $I^2L$ transistors $V_{BE}$ must be maintained over the operating temperature range of the the integrated circuit 50.

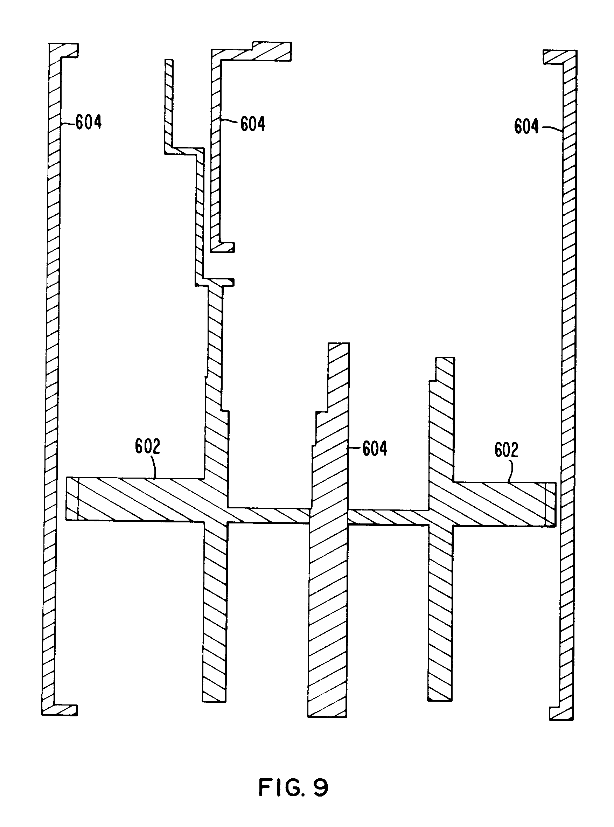

Figures 8 and 9 show details of $I^2L$ power distribution in the microprocessor integrated circuit. For the injector busses 602, voltage drops across the busses 602 is accounted for in the value of the drop off resistors 606 (Figure 8). The value of the drop off resistor 606 will determine the current in the injector branch 608, which is set by the number of $I^2L$ transistors connected to that branch 608. For ground busses 604, normally the width of the ground busses 604 is increased, hence reducing ohmic voltage drop to approach a perfect ground, zero voltage everywhere. However, in order to achieve this result, the size of the busses 604 would be prohibitively large, due to the high currents involved.

In accordance with this invention, ground balancing is achieved to overcome this limitation. Rather than attempting to reduce the ground voltage to zero, the actual ground voltage is raised to some reference voltage value VGref through a ground balancing resistor 610. The voltage drop across the main ground busses 604 is therefore accounted for through the value of that resistor 610.

In order to maintain the chip 50 total power dissipation to a minimum, it is essential to maintain VGref as small as possible. The value of VGref is determined by essentially the maximum voltage drop VGMAX across the main ground bus 604 and the maximum voltage drop VGR across a ground balancing resistor closest to the point of VGMAX. The value of VGR in turn is determined by ground current Ig and the minimum achievable resistor value Rmin.

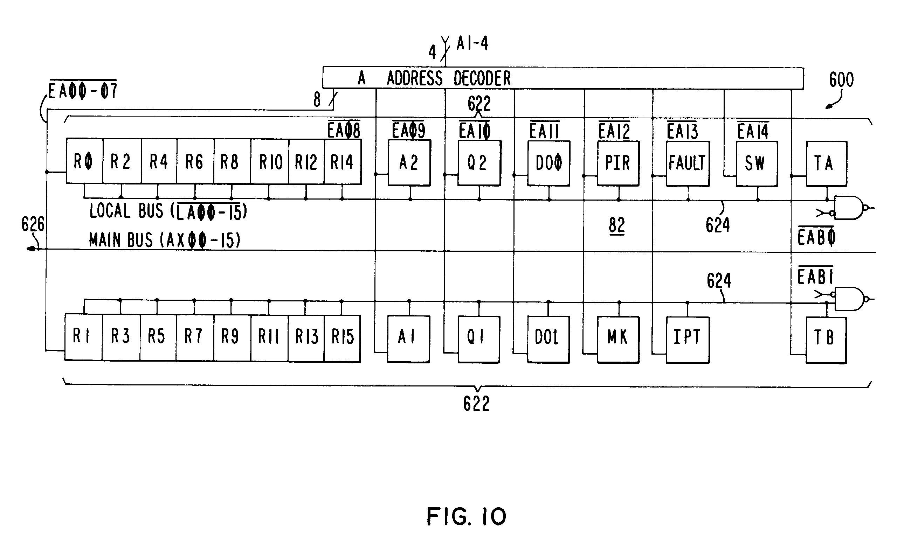

Figure 10 shows the register file data path bus structure 600 forming a part of the invention. The busing structure shown in Figure 10 is implemented in the microprocessor circuit 50 for its data path. The busing structure reflects a two-level addressing scheme, i.e., main address and local address. The main address determines the inputs to the ALU, e.g., register file, IR, MDR, IC, MAR, or the like. In the register file, a local address determines the particular register being selected. The addressing scheme is identical for the two inputs to the ALU (A and B busses) . Operation of only one of these busses will therefore be explained.

A 5-bit address (1 of 32) is required for addressing the register file 82, 5 bits for the A address and 5 bits for the B address. Two pages each consist of up to 16 registers 622, addressed in parallel using 4-bit addresses (1 of 16). Each page is connected to a separate local bus 624. The fifth address bit is combined with the register file 82 main address select signal in order to select, i.e., multiplex one of the two local busses 624 onto the main bus 626.

Fundamentally, this busing scheme reduces the total propagation delay. A simple bus structure may have all registers connected into a single local bus. The local bus will then have a total loading capacitance of a maximum of 32 collectors, in addition to wire capacitance. Using a two local bus 624 structure instead reduces the capacitance on each local bus by a factor of two. As a result, there is about an 8 nanosecond reduction in local bus access time. The simplified address decoder (1-of-16 instead of 1-of-32) reduces the propagation delay in on ALU cycle by one additional gate delay. Therefore the above described addressing scheme reduces the propagation delay in an ALU cycle by approximately 12 nanoseconds.

Some additional benefits in chip layout are obtained through use of the busing scheme. Each register requires three control signals, i.e., one clock signal (WRITE) and two out enable signals for dual port registers (READ). Using the two local bus scheme, two registers may share the same READ signals, but not WRITE signals, therefore reducing the number of control signals by a third. The number of control signals is particularly important in the chip layout, since it will determine the width of the data path. That saving in chip area offsets to a great extent the increase in area due to the additional local bus per bit.

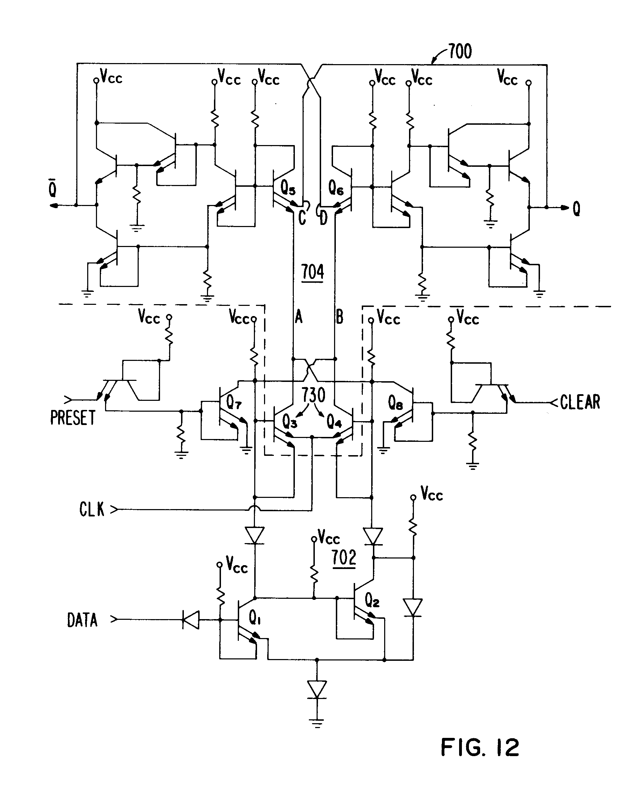

Figure 11 shows an improved latch dual port random access memory (RAM) circuit 900 used in the register file 82 of the microprocessor integrated circuit 50. In place of the D-type flip flop normally used for this purpose, the circuit 900 provides a number of advantages. A dual port D-type flip flop requires 12 gates to implement, and the circuit 900 only requires 10 gates. In terms of the microprocessor integrated circuit 50 of this invention, the significance of this reduction in gates is shown by the fact that 25% of the $I^2L$ gates in the microprocessor integrated circuit 50 are in the register file. The two gate saving in each cell of the register file results in a 15% reduction in input power for each cell and a 10% reduction in cell area.

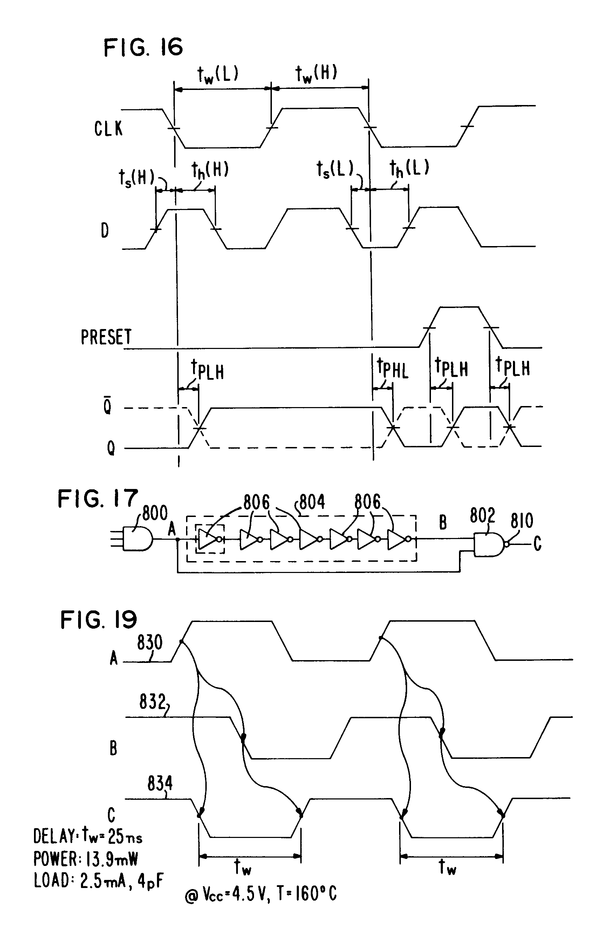

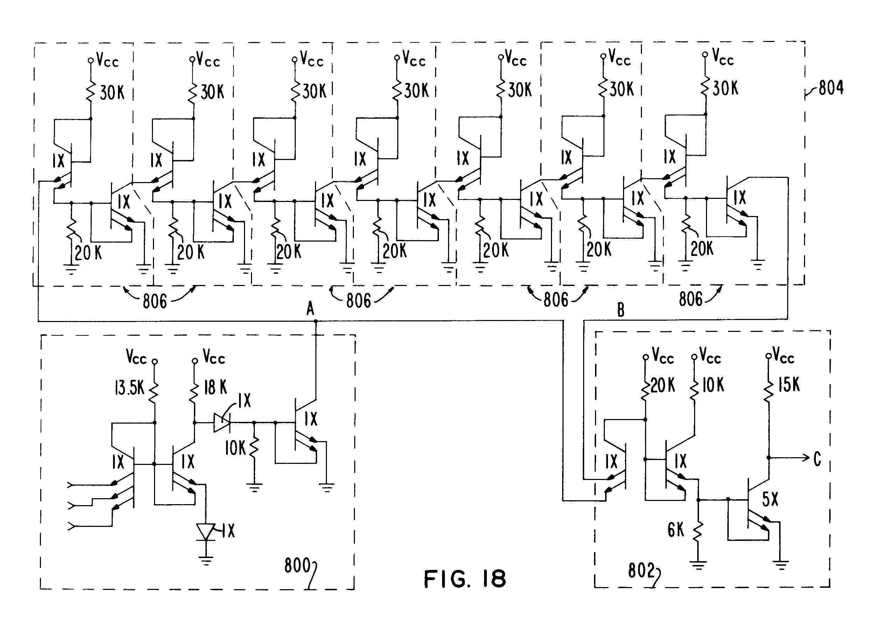

Implementing the register file cells with latches required solving a timing problem and a problem with glitches in the latch output signal. The timing problem arises from the fact that data input to the register file is shared by other registers on a common input data bus. These other registers are implemented in D-type flip flop form, and they are edge triggered. It is therefore necessary to generate a special latch enable signal EN from the main clock pulse used in edge triggering the D-flip flops of the other registers. The pulse width of the EN signal is adjusted so that only the proper data input is latched into a cell 900. The EN signal is generated from the circuits shown in Figures 16 and 17, as explained above.

Corrective action was also required in order to avoid a glitch in the latch output signals QA and QB following the leading edge of the EN signal. Since the output enable signal $\overline{OEA}$ or $\overline{OEB}$ reaches the register file from the address decoder later in the cycle after the data has been latched into the register file, no glitches will appear on the register file output busses.

The dual port latch cell 900 shown in Figure 11 consists of a basic latch cell 920, comprising gates 1-5, with an input buffer 922, consisting of gate 8, and two output gates 924, consisting of gates 6 and 7. There are also output enable buffers 926, consisting of gates 9 and 10. If desired, the output gates 924 can be connected to gate 5 to change the polarity of the output signals QA and QB.

In operation, as the latch enable signal EN becomes assertive, (active low), the latch 920 becomes transparent and the input data D are latched on gates 4 and 5. The latch outputs 924 remain open circuit as long as the output enable signals $\overline{OEA}$ and $\overline{OEB}$ are non-assertive. The latch enable signal EN may now be turned non-assertive, and the latch 920 becomes non-transparent. The output enable signals OEA and OEB may become assertive (active low) at any time and the latched data on gates 4 and 5 are transferred to QA and QB outputs, independently of one another. During the WRITE operation, a glitch may appear at the output of gate 4. That glitch will not appear at the QA and QB outputs if the READ operation is allowed to lag behind WRITE operations by more than two gate delays.

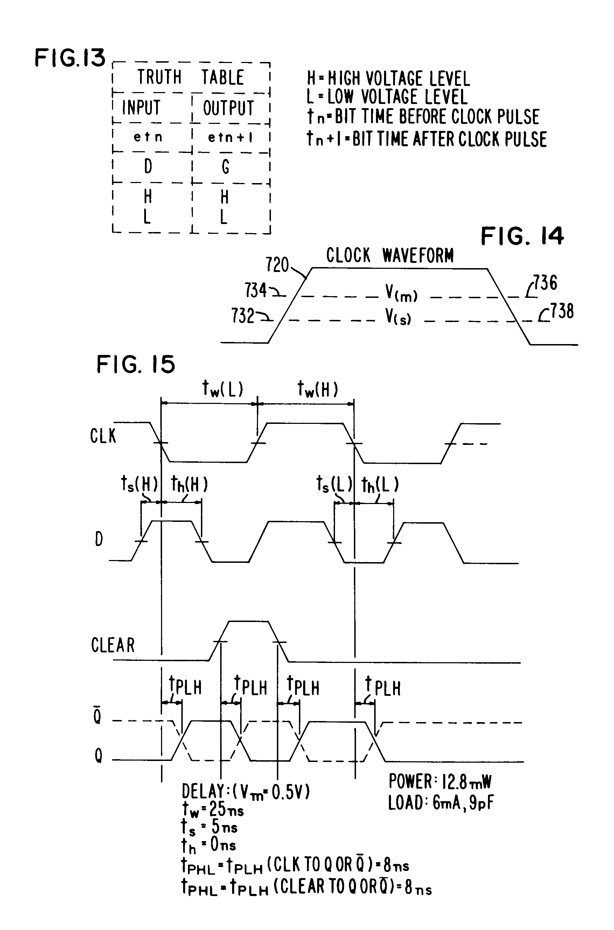

Figure 12 shows a D-type flip flop circuit 700 with asynchronous clear and preset in accordance with the invention. Figure 13 is a truth table for the circuit 700. Figures 14-16 are waveform diagrams useful for understanding operation of the circuit 700.The flip flop 700 has a master section 702 and a slave section 704. The outputs of the master section 702 are at nodes A and B. The inputs of the slave section are at nodes A, B, C and D. The CLK clock input signal controls both the master and slave sections 702 and 704.

Operation of the circuit 700 will now be explained, with reference to Figures 13-16. When the V(clk) waveform 720 (Figure 14) is less then V(m), the minimum master loading voltage, the outputs of the master section 702 are fixed regardless of any change in the inputs at node D. Therefore, nodes A and B can only be changed when waveform 720 is greater than V(m).

When waveform 720 is greater than V(s), the maximum slave loading voltage, the inputs of the slave section 704 at nodes C and D assume control, independently of the state of nodes A and B. Therefore, outputs from the master section 702 can be loaded to slave section 704 only when waveform 720 is less than V(s).

Since the circuit 700 is negative edge triggered, V(m) is always larger than V(s). Inputs to the master section are controlled by the clock pulse 720. The clock pulse 720 also regulates the state of the coupling transistors 730 which connect the master and slave sections 702 and 704. The sequence of operation is as follows: at point 732, isolate slave 704 from master 702; at point 734, enter information from D input to master section 702; at point 736, disable D input; at point 738, transfer information from master section 702 to slave section 704.

For asynchronous clear and reset, asynchronous inputs are as follows: HIGH input to CLEAR sets Q to LOW level; HIGH input to PRESET sets Q to HIGH level; simultaneous HIGH on CLEAR and PRESET makes both outputs HIGH. Also, the asynchronous CLEAR and PRESET inputs will force the flip flop 700 into a fixed state, regardless of previous state, independently of clock waveform 720. The CLEAR and PRESET inputs are designed to reduce current hogging, even if a series of CLEAR and PRESET inputs are tied together.

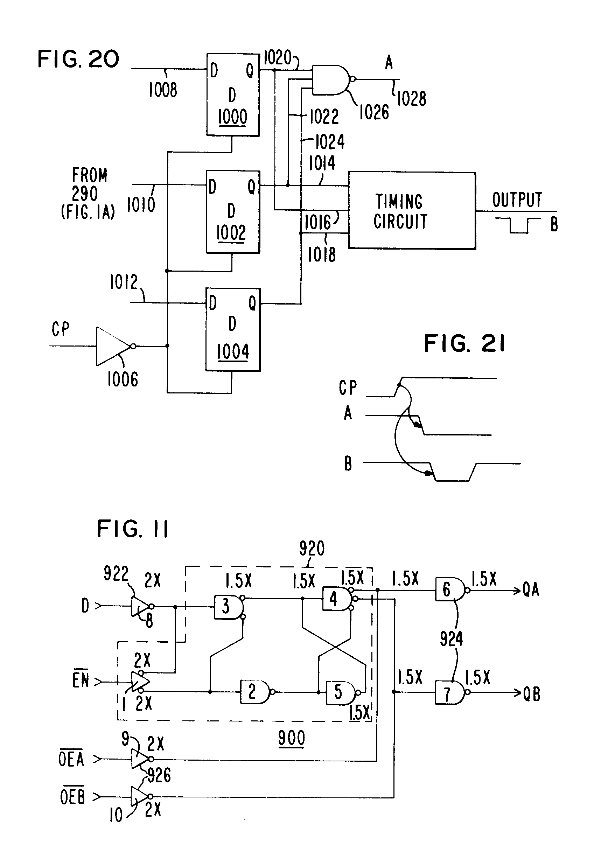

Figure 17 shows a block diagram of circuits 800, 802 and 804, comprising a three input AND gate 800, a two input NAND gate 802 and a set 804 of inverters 806. Figure 18 shows details of isoplanar I$^2$L, i.e., I$^3$L (trademark of Fairchild Camera and Instrument Corporation) latch enable circuits 800, 802 and 804. Figure 19 shows waveforms 830, 832 and 834 used in the circuits 800, 802 and 804. The three inputs to AND gate 800 will generate a signal through the AND gate 800 at node A. The signal at node A is delayed by the inverters 806 to give a signal at node B. The NAND gate 802 utilizes the signals at nodes A and B to generate a negative going pulse 834 at its output 810. The width of this pulse 834 is controlled by the gate delays of the inverters 806. However, the polarity of the pulse 834 is determined by the output NAND gate 802.

Figures 20 and 21 provide further details on the generation of the three inputs to AND gate 800 in the latch enable timing circuits of Figure 17. A clock pulse CP is supplied to D-flip flop circuits 1000, 1002 and 1004, through inverter amplifier 1006. System timing signals are provided to the D inputs of the flip flops 1000-1004 on lines 1008, 1010 and 1012. The Q outputs of flip flops 1000-1004 on lines 1014, 1016 and 1018 constitute the three inputs to AND gate 800. These Q outputs are also supplied on lines 1020, 1022 and 1024 to AND gate 1026. AND gate 1026 provides an additional set of A pulses on line 1028 for edge triggering the D-flip flop 700 (Figure 12) also used in register file 82. Figure 21 shows the timing relationship between the clock pulses CP and the A and B pulses.

It should now be readily apparent to those skilled in the art that a novel high performance microprocessor integrated circuit and improved circuits for incorporation in such a microprocessor integrated circuit capable of achieving the stated objects of the invention have been provided. The ROM organization of this invention allows both efficient layout in the integrated circuit 50 and rapid accessing of microcode stored in the ROM. Proper biasing conditions are maintained across the entire I²L integrated circuit 50 while providing an injection bus of reduced width. The data path multiplexing and busing structure of the integrated circuit 50 gives improved performance. The register file cell 900 design produces considerable saving in chip size and power requirements.

**Claims**

1.  A microprocessor integrated I²L circuit (50) having a register file (82) comprising a first plurality of registers (622), each of said first plurality being connected to one of a second plurality of local busses (624), said local busses being connected to a main bus (626) by a multiplexing means (605),

    the microprocessor integrated I²L circuit further having an address decoder for selecting a register connected to each of said local busses and a second address decoder for selecting one of said second plurality of local busses,

    characterized by a main injector bus (602) and a ground returnbus (604), at least one branch ground bus (608), and a ground balancing resistor (610) connecting said ground return bus and said branch ground bus.

2.  The microprocessor integrated I²L circuit of claim 1, characterized by at least some of said first plurality of registers including a memory storage circuit which comprises a latch having a pair of outputs, a data input to said latch, an enable signal input to control said data input to said latch, and a pair of output enable signal inputs, each connected to control one of said pair of outputs.

3.  The microprocessor integrated I²L circuit of claim 1, characterized by at least some of said registers in said register file being formed from a D-type flip flop circuit including a master section and a slave section, entry of data from a D input to said master section being controlled by a clock input, clear and preset inputs independent of said clock input serving to set a desired state for a pair of outputs from said flip flop circuit from any previous state.

4.  The microprocessor integrated I²L circuit of claim 3, characterized in that some of said registers in said register file are formed from a memory storage circuit which comprises a latch having a pair of outputs, a data input to said latch, an enable signal input to control said data input to said latch, and a pair of output enable signal inputs, each connected to control one of said pair of outputs.

5.  The microprocessor integrated I²L circuit of claim 4, characterized by a timing circuit for enabling said latch memory circuit in said register file of said microprocessor, said timing circuit comprising a delay means connected to receive timing pulses from a timing pulse generating means, said timing pulse generating means being connected to receive a plurality of inputs for generating the timing pulses, said delay means being connected to supply delayed timing pulses as a first input to an output gate, said timing pulse generating means further being connected to supply undelayed timing pulses as a second input to said output gate, latch enable signals being supplied as an output from said output gate to said latch memory storage circuit.

6.  The microprocessor integrated I²L circuit of claims 3, 4 or 5, additionally characterized by a read only memory which comprises a first plurality of X and Y addressable memory locations arranged in words, bits and pages, the X direction addressing one of a second plurality of words on each page, the Y direction addressing one of a third plurality of pages and one of a fourth plurality of bits.

7.  The microprocessor integrated I²L circuit of claim 6, additionally characterized by a decode circuit for said read only memory which comprises a plurality of multiple emitter page selection transistors, one of the multiple emitters of each page selection transistor being connected to supply an output from said decode circuit, another of the multiple emitters of each page selection transistor being connected to a base of its transistor and to receive a reference potential.

**Patentansprüche**

1. Ein integrierter I$^2$L Mikroprozessorschaltkreis (50) mit einer Registeranordnung (82), umfassend eine erste Mehrzahl von Registern (622), wobei jede der ersten Mehrzahl verbunden ist mit einer aus einer zweiten Mehrzahl von lokalen Bussen (624), welche lokalen Busse mit einem Hauptbus (626) über ein Multiplexmittel (605) verbunden sind,
   wobei der integrierte I$^2$L Mikroprozessorschaltkreis ferner einen Adressendekoder aufweist für die Auswahl eines Registers, verbunden mit jedem der lokalen Busse, und einen zweiten Adressendekoder für die Auswahl eines der zweiten Mehrzahl von lokalen Bussen,
   gekennzeichnet durch einen Hauptinjektorbus (602) und einen Masserücklaufbus (604), mindestens einen Verzweigungsmassebus (608), und einen Masseausgleichwiderstand (610), der den Masserücklaufbus und den Verzweigungsmassebus verbindet.

2. Der integrierte I$^2$L Mikroprozessorschaltkreis nach Anspruch 1, dadurch gekennzeichnet, daß mindestens einige aus der ersten Mehrzahl von Registern einen Speicherablageschaltkreis umfassen, der einen Haltekreis umfaßt mit einem Paar von Ausgängen, einen Dateneingang zu dem Haltekreis, einen Entsperrsignaleingang zur Steuerung des Dateneingangs zu dem Haltekreis und ein Paar von Ausgangsentsperrsignaleingängen, jeweils verbunden zum Steuern eines aus dem Paar von Ausgängen.

3. Der integrierte I$^2$L Mikroprozessorschaltkreis nach Anspruch 1, dadurch gekennzeichnet, daß mindestens einige der Register in der Registeranordnung von einem D-Typ Flip-Flop-Schaltkreis gebildet sind mit einem Führungsabschnitt und einem geführten Abschnitt, wobei die Eingabe von Daten von einem D-Eingang des Führungsabschnitts gesteuert wird durch einen Takteingang, wobei die Lösch- und Voreinstelleingänge unabhängig von dem Takteingang dazu dienen, einen gewünschten Status für ein Paar von Ausgängen von dem Flip-Flop-Schaltkreis, ausgehend von irdendeinem vorhergehenden Status, zu setzen.

4. Der integrierte I$^2$L Mikroprozessorschaltkreis nach Anspruch 3, dadurch gekennzeichnet, daß einige der Register in der Registeranordnung von einem Speicherablageschaltkreis gebildet sind, der einen Haltekreis umfaßt mit einem Paar von Ausgängen, einem Dateneingang zu dem Haltekreis, einem Entsperrsignaleingang zum Steuern des Dateneingangs zu dem Haltekreis, und einem Paar von Ausgangsentsperrsignaleingängen, jeweils verbunden zur Steuerung eines aus dem Paar von Ausgängen.

5. Der integrierte I$^2$L Mikroprozessorschaltkreis nach Anspruch 4, gekennzeichnet durch einen Zeitlageschaltkreis zum Entsperren des Haltespeicher-Schaltkreises in der Registeranordnung des Mikroprozessors, welcher Zeitlageschaltkreis ein Verzögerungsmittel umfaßt, angeschlossen zum Empfang von Zeitlage-Impulsen von einem Zeitlage-Impulserzeugungsmittel, welches Zeitlage-Impulserzeugungsmittel verbunden ist zum Empfang einer Mehrzahl von Eingängen für die Erzeugung der Zeitlage-Impulse, wobei das Verzögerungsmittel angeschlossen ist zum Liefern von verzögerten Zeitlage-Impulsen als einen ersten Eingang an ein Ausgangsgatter, wobei das Zeitlage-Impulserzeugungsmittel ferner angeschlossen ist zum Liefern unverzögerter Zeitlage-Impulse als einen zweiten Eingang an das Ausgangsgatter, während Haltekreis-Entsperrsignale geliefert werden als ein Ausgang von dem Ausgangsgatter an den Haltespeicherablageschaltkreis.

6. Der integrierte I$^2$L Mikroprozessorschaltkreis nach Ansprüchen 3, 4 oder 5, zusätzlich gekennzeichnet durch einen Festwertspeicher, der eine erste Mehrzahl von X- und Y-adressierbaren Speicherplätzen umfaßt, angeordnet in Worten, Bits und Seiten, wobei die X-Richtung eines aus einer zweiten Mehrzahl von Worten auf jeder Seite adressiert, die Y-Richtung eine aus einer dritten Mehrzahl von Seiten adressiert und eine aus einer vierten Mehrzahl von Bits.

7. Der integrierte I$^2$L Mikroprozessorschaltkreis nach Anspruch 6, zusätzlich gekennzeichnet durch einen Dekodierschaltkreis für den Festwertspeicher, der eine Mehrzahl von Multi-Emitterseitenauswahl-Transistoren umfaßt, wobei einer der mehreren Emitter jedes Seitenauswahl-Transistors angeschlossen ist zum Liefern eines Ausgangs von dem Dekodierschaltkreis, ein anderer der mehrfachen Emitter jedes Seitenauswahl-Transistors angeschlossen ist an eine Basis seines Transistors und zum Empfang eines Referenzpotentials.

**Revendications**

1. Circuit intégré I²L à microprocesseur (50) comprenant une pile de registres (82) comportant une première pluralité de registres (622), chacun des registres de cette première pluralité étant connecté à l'un des bus d'une seconde pluralité de bus locaux (626), lesdits bus locaux étant connectés à un bus principal par des moyens de multiplexage (605),

    le circuit intégré I²L à microprocesseur comportant également un décodeur d'adresses pour sélectionner un registre connecté à chacun desdits bus locaux et un second décodeur d'adresses pour sélectionner l'un des bus parmi la seconde pluralité de bus locaux,

    caractérisé par un bus d'injection principal (602) et un bus de retour à la masse (604) , par au moins un bus de branchement à la masse et par une résistance d'équilibrage de masse (610) connectant ledit bus de retour à la masse audit bus de branchement à la masse.

2. Circuit intégré I²L à microprocesseur suivant la revendication 1, caractérisé en ce qu'au moins certains registres parmi la première pluralité de registres comprennent un circuit à mémoire comportant un verrou avec deux sorties, une entrée de données, une entrée de signal d'autorisation pour commander ladite entrée de données de ce verrou, et deux entrées de signaux d'autorisation de sortie qui sont connectées respectivement de manière à commander l'une desdites deux sorties.

3. Circuit intégré I²L à microprocesseur suivant la revendication 1, caractérisé en ce qu'au moins certains desdits registres de ladite pile de registres sont formés par un circuit basculeur de type D comportant une partie maître et une partie esclave, l'introduction de données à partir d'une entrée D vers ladite partie maître étant commandée par une entrée d'horloge, des entrées de remise à zéro et de fixation à l'état préalable, indépendantes de ladite entrée d'horloge servant à fixer un état souhaité d'une paire de sorties dudit circuit basculeur à partir de tout état précédent.

4. Circuit intégré I²L à microprocesseur suivant la revendication 3, caractérisé en ce que certains desdits registres de ladite pile de registres sont formés par un circuit à mémoire qui comprend un verrou ayant deux sorties, une entrée de données pour ce verrou, une entrée de signal d'autorisation pour commander ladite entrée de données pour ce verrou, et deux entrées de signaux d'autorisation de sortie connectées respectivement de manière à commander lesdites deux sorties.

5. Circuit intégré I²L à microprocesseur suivant la revendication 4, caractérisé en ce qu'il comprend un circuit de minutage pour autoriser ledit circuit de mémoire à verrou dans ladite pile de registres dudit microprocesseur, ledit circuit de minutage comprenant des moyens à retard connectés pour recevoir des impulsions de minutage de moyens pour engendrer des impulsions de minutage, lesdits moyens pour engendrer des impulsions de minutage étant reliés pour recevoir une pluralité d'entrées pour engendrer des impulsions de minutage, lesdits moyens à retard étant reliés de manière à fournir des impulsions de minutage retardées comme première entrée à une porte de sortie, lesdits moyens pour engendrer des impulsions de minutage étant également reliés pour fournir des impulsions de minutage retardées comme seconde entrée à ladite porte de sortie, des signaux d'autorisation de verrouillage étant fournis comme une sortie de ladite porte de sortie vers ledit circuit de mémoire à verrou.

6. Circuit intégré I²L à microprocesseur suivant la revendication 3,4 ou 5 caractérisé en ce qu'il comprend en outre une mémoire morte qui comprend une première pluralité d'emplacements de mémoire adressables en X et Y et agencés en mots, en bits et en pages, la direction X adressant un mot parmi une seconde pluralité de mots dans chaque page, la direction Y adressant une page parmi une troisième pluralité de pages et un bit parmi une quatrième pluralité de bits.

7. Circuit intégré I²L à microprocesseur suivant la revendication 6 caractérisé en ce qu'il comprend en outre un circuit décodeur pour ladite mémoire morte qui comprend une pluralité de transistors de sélection de page à plusieurs émetteurs, l'un des émetteurs de chaque transistor de sélection de page étant connecté de manière à fournir une sortie dudit circuit de décodage, un autre parmi lesdits émetteurs de chaque transistor de sélection de page étant connecté à une base de son transistor et de manière à recevoir un potentiel de référence.

FIG. IA
FIG. IB

FIG. I

FIG. IA

INFORMATION BUS

INSTRUCTION REGISTER — 108

106

98

152

MAPPING PLA — 150

110

EXECUTE AND EFFECTIVE ADDRESS POINTERS — 154

BRANCH CONDITIONS

158

156 — MULTIPLEXER

184

BRANCH PLA — 180

B BUS

170

172

183

160

INCREMENTER

MICROCONTROL STORE — 162

54

176

166

182

70

NEXT ADDRESS REGISTER

174

MICROPROGRAM REGISTER — 164

178    168

186

66

MICROPROGRAMMED CONTROL

CONTROL BITS

294    290    292

EXTERNAL HANDSHAKE

TIMING ARBITRATION UNIT

INTERNAL

60

TIMING UNIT

EP 0 138 651 B1

FIG. 1B

13

FIG. 2

$\overline{\text{BUS REQ.}} = \text{A}$
(AND)
$\overline{\text{BUS GNT}} = \text{A}$
(AND)
$\overline{\text{BUS LOCK}} = \text{NA}$

$\overline{\text{BUS GNT}} = \text{NA}$
(OR)
$\overline{\text{BUS LOCK}} = \text{A}$

$\overline{\text{BUS REQ}} = \text{A (AND)}$
$[\overline{\text{BUS GNT}} = \text{NA (OR)}$
$\overline{\text{BUS LOCK}} = \text{A}]$

$\overline{\text{BUS GNT}} = \text{A}$
(AND)
$\overline{\text{BUS LOCK}} = \text{NA}$

$S_Z$

$S_0$

$\overline{\text{BUS REQ}} = \text{NA}$

$S_1$

RDYA = NA

$S_4$

ALBR = NA

RDYA = A

$S_2$

$S_5$

ALBR = A
(OR)
ABRT = A

ALBR = NA
(AND)
RDYD = A

$S_3$

$S_{5A}$

RDYD = NA

$S_{3A}$

$S_{5B}$

ALBR = A
(OR)
ABRT = A

---

FIG. 3

50

300 — CLOCKS
302
CPU CLK
TIMER CLK
(100 K Hz)
304 308
EXTERNAL REQUESTS
$\overline{\text{RESET}}$
$\overline{\text{CON REQ.}}$ 310
306

312 — PWRDN INT
314 — USR₀ INT
USR₁ INT
USR₂ INT
INTERRUPTS
USR₃ INT
USR₄ INT
310 — USR₅ INT
316 — IOL₁ INT
IOL₂ INT

320 — MEM PRTER
322 — MEM PARER
324 — EXT ADR. ER
FAULTS
SYS FLT₀
326 — SYS FLT₁

318 — IB₀
IB₁
IB₂
IB₃
IB₄
IB₅
IB₆
INFORMATION
BUS
IB₇
IB₈
IB₉
IB₁₀
IB₁₁
328 — IB₁₂
IB₁₃
IB₁₄
IB₁₅

V_CC V_INJI V_INJZ GND GND
382 384 380

AK₀ — 332
AK₁ — 330
AK₂
AK₃
STATUS BUS
AS₀
AS₁ — 334
AS₂
AS₃

UNRCV ER — 338 336
MAJ ER — ERRORS
340

DMA ER — 344 346
NML PW RUP — DISCRETES
SNEW — 342
$\overline{\text{TRIGO RST}}$ — 348
350

R/$\overline{\text{W}}$ — 354 356
M/$\overline{\text{IO}}$ — 358
D/$\overline{\text{I}}$ — BUS CONTROL
STRBA — 360
RDYA — 362
$\overline{\text{STRBD}}$ — 364
RDYD — 352
366

$\overline{\text{BUS REQ.}}$ — 372 374
$\overline{\text{BUS GNT}}$ — BUS ARBITRATION
$\overline{\text{BUS BUSY}}$ — 376
$\overline{\text{BUS LOCK}}$ — 370
378

# FIG. 4

402

ADDRESS 0  ADDRESS 1  . . . .  ADDRESS 199

PAGE 1   BIT 0
PAGE 2   BIT 0
PAGE 3   BIT 0
PAGE 4   BIT 0

BIT 0

404

PAGE 1   BIT 1
PAGE 2   BIT 1
PAGE 3   BIT 1
PAGE 4   BIT 1

BIT 1

400

406

PAGE 1   BIT 60
PAGE 2   BIT 60
PAGE 3   BIT 60
PAGE 4   BIT 60

BIT 60

410

PAGE 1   BIT 61
PAGE 2   BIT 61
PAGE 3   BIT 61
PAGE 4   BIT 61

BIT 61

X DIRECTION

FIG. 6

FIG. 5

EP 0 138 651 B1

FIG. 8

FIG. 7

FIG. 9

FIG. 10

FIG. 12

## FIG.13

| TRUTH TABLE | |
|---|---|
| INPUT | OUTPUT |
| e t n | e t n + 1 |
| D | G |
| H | H |
| L | L |

H = HIGH VOLTAGE LEVEL
L = LOW VOLTAGE LEVEL
$t_n$ = BIT TIME BEFORE CLOCK PULSE
$t_n + 1$ = BIT TIME AFTER CLOCK PULSE

## FIG. 14

CLOCK WAVEFORM

720
734 —— $V_{(m)}$ ——— 736
732 ——— $V_{(s)}$ ——— 738

## FIG. 15

$t_w(L)$    $t_w(H)$

CLK

$t_s(H)$ $t_h(H)$     $t_s(L)$ $t_h(L)$

D

CLEAR

$t_{PLH}$  $t_{PLH}$  $t_{PLH}$   $t_{PLH}$

$\bar{Q}$

Q

DELAY: ($V_m$ = 0.5V)
$t_w$ = 25 ns
$t_s$ = 5 ns
$t_h$ = 0 ns
$t_{PHL}$ = $t_{PLH}$ (CLK TO Q OR $\bar{Q}$) = 8 ns
$t_{PHL}$ = $t_{PLH}$ (CLEAR TO Q OR $\bar{Q}$) = 8 ns

POWER: 12.8 mW
LOAD: 6mA, 9pF

FIG. 16

FIG. 17

FIG. 19

DELAY·$t_w$=25ns
POWER: 13.9mW
LOAD: 2.5mA, 4pF

@ $V_{cc}$=4.5V, T=160°C

FIG. 18

FIG. 20

FIG. 21

FIG. 11